# EUROPEAN PATENT SPECIFICATION

(11) **EP 1 930 260 B1**
(45) Date of publication and mention of the grant of the patent: **23.03.2011**
(21) Application number: 07253616.2
(22) Date of filing: 12.09.2007
(51) Int. Cl.: B65G 67/04, B65G 67/20, B60P 3/07

(54) **Transporting Vehicles**
Transportfahrzeuge
Véhicules de transport

(30) Priority: 04.12.2006 GB 0624217; 07.08.2007 WO PCT/GB2007/003013
(43) Date of publication of application: 11.06.2008
(73) Proprietor: Cronos Equipment (Bermuda) Limited, Hamilton, HM11 (BM)
(72) Inventor: Bjoresson, Kent Evert, 442 74 Kama (SE)
(74) Representative: Bardo, Julian Eason

(56) References cited:
- WO-A-2006/013655
- US-A- 3 675 795
- US-A- 5 040 938

## Description

This invention relates to a method of loading vehicles into a freight container, to a freight container and frame combination for transporting vehicles and to a frame for use in the container and frame combination. The invention is concerned particularly, but not exclusively, with the case where the vehicles are cars.

Freight containers are widely used for transporting goods. When used in this specification the term "freight container" refers to a container which has corner fittings which have openings dimensioned to enable the container to be handled by standard load handling equipment. The corner fittings are usually separate cuboidal components welded to the corners of the container but it is possible for them to be formed as an integral part of the container.

Such containers typically have an overall exterior width of just under 2,500 mm, a centre-to-centre spacing between openings of about 2,260 mm and one of several standard lengths, the most common of which are 20 ft (6058 mm), 40 ft (12192 mm) and 45 ft (13716 mm).

It is already known to transport cars in freight containers by using frames mounted inside the container. In a known system cars are driven into the container and onto a frame inside the container. The frame can then be raised by operating a motor to allow other cars to be driven onto a lower frame. In this way it is said that five Lotus Elise (Registered Trade Marks) cars can be conveyed in one 40 ft (12192 mm) freight container. When the container is on a return trip the frames can be raised to the top of the interior of the container to allow goods to be transported in the remaining space in the container.

The arrangement just described has various disadvantages: a freight container has a standard width and, when a car of average size is driven into a container, there is very little room for a person to open a door of the car; the modification to the container to install the frames and the mechanisms for raising and lowering them is expensive; the freight container has to be returned after use to its starting location or to another location from which it is desired to transport cars; and a degree of skill and/or experience is required to operate the mechanisms correctly when loading cars into the container.

US 5,040,938 discloses a method for loading vehicles into a freight container according to the preamble of claim 1 and a freight container and frame combination for transporting vehicles according to the preamble of claim 17, and also a system for loading and transporting wheel vehicles wherein a plurality of vehicles are supported on frames vertically displaced relative to each other, the vehicles and frame then being inserted into a container.

US 3,675,795 discloses a frame for supporting a single car, wherein the frame may be tilted by the operation of a fork lift truck and locked in position by a support arm.

It is an object of the invention to provide a method of loading vehicles into a freight container that overcomes or mitigates at least some of the problems referred to above.

It is a further object of the invention to provide a freight container and frame combination, and a frame for use in such a combination, that overcome or mitigate at least some of the problems referred to above.

According to a first aspect of the invention there is provided a method of loading vehicles into a freight container the method comprising the steps of

loading vehicles end to end onto an elongate frame disposed at least substantially outside the container but
sized to fit within the container and to extend along the length of most of the interior of the container, and
subsequently moving the frame with the vehicles thereon into the freight container,
characterised in that the vehicles are carried on the frame tilted about a transverse axis with one end of one vehicle above or below an adjacent end of another vehicle, and in that a vehicle is loaded onto the frame in a substantially horizontal orientation and is subsequently moved into its tilted position by manual operation of a mechanism.

By loading the vehicles, which will usually be cars, onto the frame and subsequently moving the frame with the vehicles loaded thereon into the container, it becomes possible to avoid the need to leave a vehicle when it is within the confined space of the container. That makes it easier to open a door of the vehicle to leave the vehicle and reduces the likelihood of damaging the vehicle. No adaptation of the freight container is necessary and the frame need not be fixed to the freight container. Loading of the vehicles into the container can be a very simple operation. Thus the freight container can itself be of entirely standard design and, after being used to transport the vehicles on the frame, may then be used for any other job and be sent to any other location. Only the frame needs to be returned to the original location or to whatever other location is required.

Moving the vehicle into its tilted position by manual operation of a mechanism makes it a simple matter to tilt the vehicle without the need for additional equipment.

Preferably the frame has one or more wheels; in an embodiment of the invention described below the frame has one or more wheels, in the example illustrated a pair of wheels, at one end of the frame. Where reference is made herein to a "wheel" it should be understood that the term is to be construed broadly as covering other rotatable elements that perform the function of a wheel including for example a ball or a roller.

Preferably the frame accommodates a single row of vehicles, but it is within the scope of the invention for the frame to accommodate two rows of vehicles one above another. Accommodating only a single row allows the frame to be of simpler construction and also allows cars of average or greater than average height to be accommodated within a freight container of standard height. The vehicles are preferably carried in the frame tilted about a transverse axis with an end of one vehicle above or below an adjacent end of another vehicle. By having one end of one vehicle overlapping an adjacent end of another vehicle, the overall length taken up by a row of a given number of vehicles is reduced, enabling more vehicles to be accommodated. In the case of a 40 ft (12192 mm) container, the tilting enables three cars of average length to be accommodated when otherwise only two cars could be accommodated. With small cars it is possible for the frame to be designed to accommodate four cars. Preferably the front of one vehicle is below the adjacent rear of another vehicle. Generally, the front of a vehicle is less high than the rear of a vehicle and it is therefore easier to tilt the vehicles in this way.

The vehicles can simply be driven onto the frame and onto platforms tiltably mounted on the body of the frame. The platforms are then tilted. The vehicle is moved into its tilted position by manual operation of a mechanism forming part of the frame. The mechanism is preferably a lever mechanism and may be operated by moving the free end of a lever through a distance of more than 1 m. By having a large amplitude of movement of the free end of the lever a large mechanical advantage can be obtained for effecting tilting of the vehicle, since the tilting then requires a much smaller movement of the centre of mass of the vehicle It is especially advantageous if the tilting includes some downward movement of one end of the vehicle.

One or more of the platforms may be provided with a movable front part which in one position obstructs forward movement of a vehicle off the front of the platform and in another position allows forward movement of a vehicle off the front of the platform. Such a movable front part can allow vehicles to be moved from one platform to another during loading but retain a loaded vehicle on a tilted platform.

Auxiliary platforms may be provided between adjacent platforms to provide bridges for vehicles being moved from one platform to another. In an embodiment of the invention described below the auxiliary platforms are movably mounted for movement between operative and inoperative positions. The movement can be caused by a mechanism provided for tilting the platform.

In an embodiment of the invention described below, each platform is pivotally connected to the body of the frame and is also connected to the frame by a pair of links, each pivotally connected to the other at one end and pivotally connected respectively to the body of the frame and the platform at the other end. The links are rotated by a driving link which at one end is pivotally connected to them and at the other end is pivotally connected to a lever.

A locking mechanism may be provided to lock the lever mechanism in a position corresponding to the tilted position of the vehicle and/or in a position corresponding to the substantially horizontal position of the vehicle. Such a locking device may be releasable from its locking position by movement opposed by a spring. The locking mechanism preferably includes a latching member, which may be resiliently biased and which may be in the form of a hook. A first latching member is preferably provided for locking the mechanism in a position corresponding to the tilted position of the vehicle and a second latching member is preferably provided for locking the mechanism in a position corresponding to the substantially horizontal position of the vehicle. An over-centre mechanism may be employed as well or instead so that the mechanism stays in an end position due to the weight of the vehicle.

A retarding mechanism for decelerating parts of the frame as they approach one or both end positions may also be provided. The retarding mechanism may comprise a hydraulic piston and cylinder arrangement.

The vehicle is preferably tilted to an angle in the range of 10 to 30 degrees to the horizontal. In an embodiment of the invention described below, the angle of tilting is about 20 degrees.

In line with a standard design, the freight container preferably has a closed end and an openable end through which the frame is moved when the vehicles are loaded into the container. The frame is preferably positioned with one end of the frame in the open end of the freight container and the rest of the frame outside the container, and vehicles are then preferably loaded onto the frame, the frame is then moved into the container and the end of the container closed.

Most commonly, freight containers have top, bottom, side and end walls that are entirely closed when the container is closed and that is the preferred form of container for use in the present invention. Some freight containers have partly or fully open sides or tops and such containers may be employed in the present invention, although they are less desirable because they give less good protection to the vehicles being transported.

The vehicles are preferably loaded into the container with the vehicles facing towards the front of the container. When the vehicles are then tilted in the preferred orientation with the front of the vehicle below the rear, any unforeseen movement of the vehicle is likely to be towards the closed front end of the container rather than towards the rear of the container which could be open and where personnel could be present.

The method preferably further includes the subsequent step of transporting the container from one place to another with the vehicles contained therein. The method preferably further includes the subsequent steps of:
moving the frame with the vehicles loaded thereon out of the container until the frame is disposed at least substantially outside the container, and
subsequently unloading the vehicles from the frame.
As will be understood the unloading of the freight container can be carried out simply by reversing the steps carried out during loading. Thus, for example, after moving the frame out of the container, the vehicles may be tilted back to a substantially horizontal orientation and then unloaded from the frame by simply driving them off the frame.

Because the unloaded frame is not inextricably connected to the freight container there is no need for it to stay with the same container. The unloaded frame may be placed in another freight container and transported therein to another place where it is required. That other place will commonly be the place where the vehicles were loaded onto the frame, but it does not need to be. The freight container may be used for a completely different task and need not be adapted in any way to enable the method of the invention to be carried out Preferably the unloaded frame is dimensioned such that a plurality of unloaded frames can be carried together in a standard freight container, for example, by stacking one frame on top of another. In an embodiment of the invention described below six frames can be fitted on top of one another in a freight container of a standard height.

According to the first aspect of the invention there is also provided a freight container and frame combination comprising:
a freight container,
a frame receivable in the container for extending along the length of most of the interior of the container, the frame being suitable for receiving vehicles loaded end to end on the frame and being movable between a position substantially within the container and a position in which it is substantially outside the container,
characterised in that the frame includes a plurality of platform assemblies along the length of the frame, each assembly including a respective tiltably mounted platform and a respective manually operated mechanism for tilting the platform.

The freight container and frame combination is preferably suitable for carrying out the method described above and may therefore incorporate features corresponding to those described above in respect of the method. Thus, for example, the frame need not be fixed to the freight container and may include one or more wheels. Each platform may be able to be tilted through an angle in the range of 10 to 30 degrees. The mechanism for tilting each platform may be a lever mechanism. A locking mechanism, an over-centre mechanism and/or a retarding mechanism may be provided.

The present invention further provides a frame for use in a freight container and frame combination as defined above.

By way of example, certain embodiments of the invention will now be described with reference to the accompanying schematic drawings, of which:
Fig. 1 is a side view of a freight container and frame combination during a first, early, stage of loading vehicles;
Fig. 2 is a side view of the frame and three vehicles during a second, advanced, stage of loading vehicles;
Fig. 3 is a side view of the frame alone, during a middle stage of loading vehicles;
Fig. 4 is a plan view of the frame shown in Fig. 3 at the same stage of loading vehicles;
Fig. 5A is a side view of a platform of the frame with a front part in a first position;
Fig. 5B is a side view of the platform shown in Fig. 5A with the front part pivoted into a second position;
Fig. 5C is a schematic view of a platform showing different front parts that may be employed on the platform;
Fig. 6A is a side view of a platform in a tilted position, showing a lever mechanism for tilting the platform;
Fig. 6B is a side view to a larger scale of part of the lever mechanism shown in Fig. 6A;
Fig. 7A is a side view of the platform and lever mechanism shown in Fig. 6A, but with the platform shown in a non-tilted, horizontal, position;
Fig. 7B is a side view to a larger scale of part of the lever mechanism shown in Fig. 7A;
Fig. 8A is a side view of a modified form of lever mechanism for tilting the platform with the lever mechanism shown in a position for tilting the platform;
Fig. 8B is a plan view of the modified form of lever mechanism shown in Fig. 8A and in the position shown in Fig. 8A;
Fig. 8C is a side view of part of the lever mechanism shown in Figs. 8A and 8B and in the position shown in Figs. 8A and 8B;
Fig. 9A is a side view of the modified form of lever mechanism for tilting the platform with the lever mechanism shown in a position for not tilting the platform;
Fig. 9B is a plan view of the modified form of lever mechanism shown in Fig. 9A and in the position shown in Fig. 9A;
Fig. 9C is a side view of part of the lever mechanism shown in Figs. 9A and 9B and in the position shown in Figs. 9A and 9B;
Fig. 10A is a side view of another modified form of lever mechanism showing the mechanism in a position for not tilting the platform; and
Fig. 10B is a side view of the lever mechanism shown in Fig. 10A, but showing the mechanism in a position for tilting the platform.

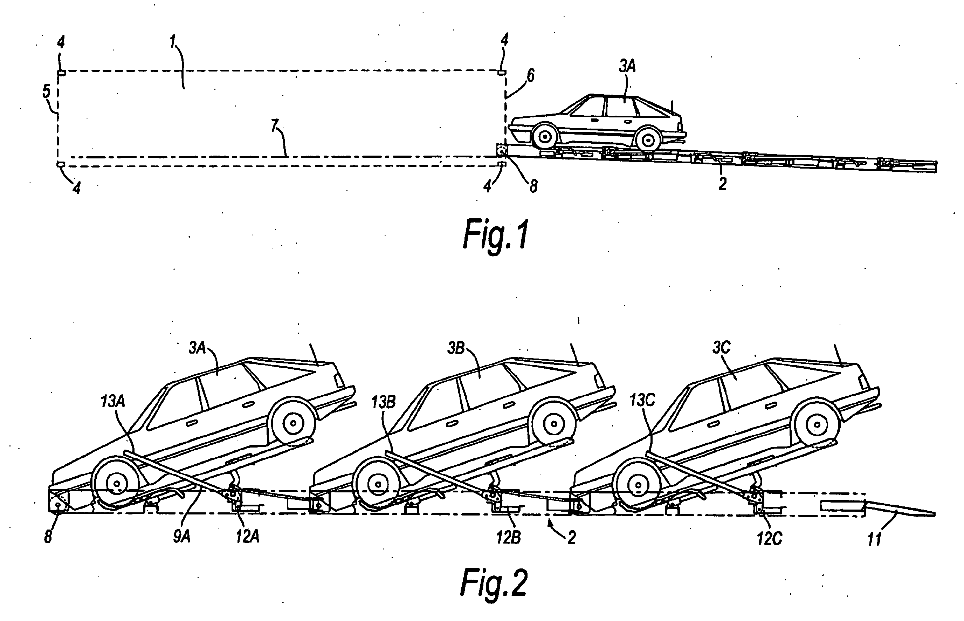

Referring first to Fig. 1, there is shown in dotted outline an ISO freight container 1 which in this particular example has a length of 40 ft (12192 mm), and a frame 2 on which a first car 3A is shown. The freight container 1 has ISO corner fittings 4 at each of its eight corners and has closed sides, top and bottom, a closed end 5 and an open end 6 which is closable by a pair of doors (not shown). The container has a floor 7 (shown by a chain dotted line). The design of the freight container 1 may be entirely conventional.

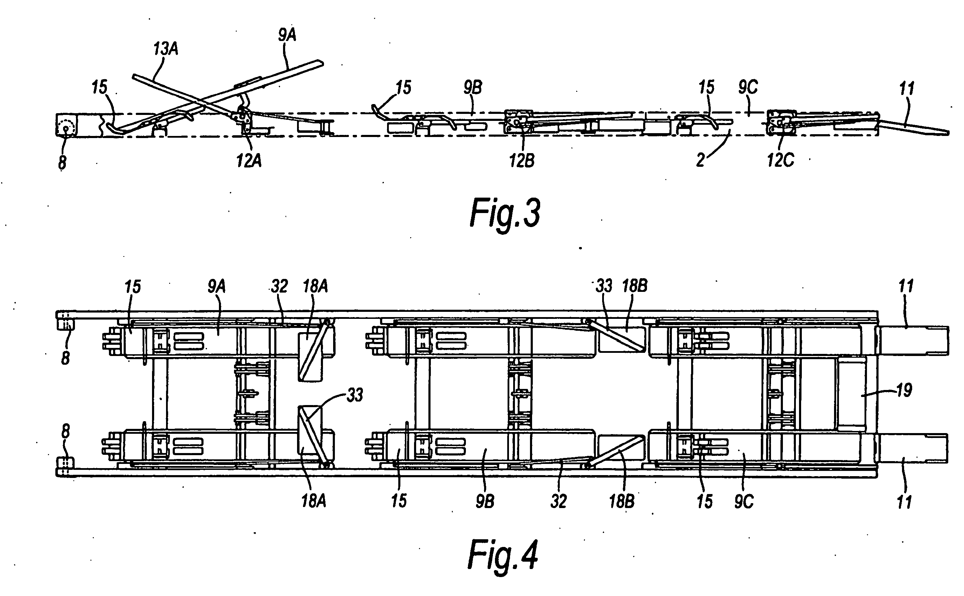

The frame 2 is provided with a pair of wheels 8 at one extreme end of the frame and in Fig. 1 those wheels are shown resting on the floor 7 of the container just inside the container so that the frame 2 is disposed substantially outside the container. Referring now also to Figs. 2 to 4, the frame includes three platforms 9A, 9B and 9C on which in Fig. 2 three cars 3A, 3B and 3C are shown carried in tilted positions. As can be seen in Fig. 4, the platforms are positioned in end to end relationship and together define a pair of wheel tracks running along the length of the frame. At the end of the frame 2 opposite the wheels 8, a pair of ramps 11 are provided to allow cars to be driven up onto, and then along, the frame 2 to rest on one of the platforms 9A, 9B and 9C. The ramps 11 can be stowed within the frame when they are not in use. Each platform 9A, 9B and 9C is of substantially the same construction and forms part of a respective platform assembly that includes also a lever mechanism 12A, 12B and 12C having a lever 13A, 13B and 13C (all of which are shown in Fig. 2). Particular examples of lever arrangements are described later.

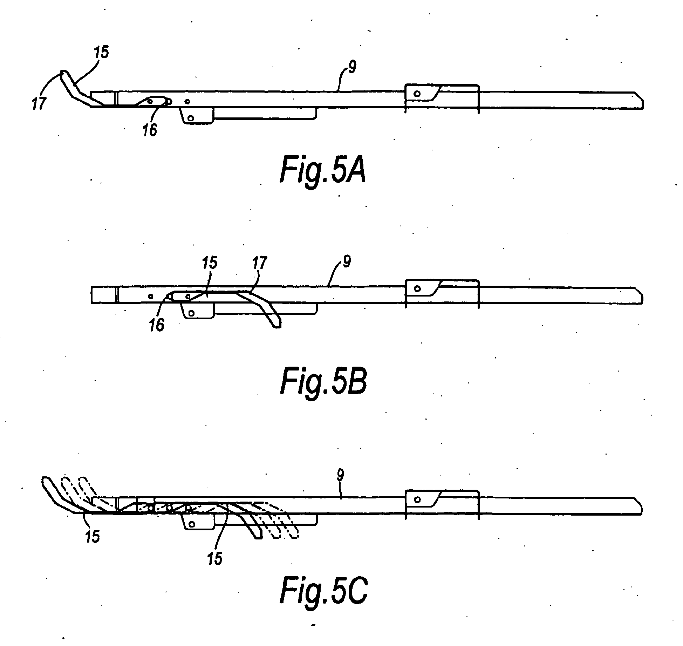

It may be noted that in Figs. 3 and 4, the platform 9A is shown in its tilted position. In this position a car would usually be on the platform 9A but the car is omitted to allow the platform to be seen more clearly. At the front of each of the platforms 9A, 9B and 9C a pivotable front part 15 is provided, as shown most clearly in Figs. 5A and 5B where the platform is referenced 9. The pivotable front part pivots about a transverse horizontal axis 16 and can be pivoted manually between two positions, shown in Figs. 5A and 5B. In the position shown in Fig. 5A, the free end 17 of the front part 15 projects upwardly and defines a forward limit for the front wheels of a car driven onto the platform. In Figs. 3 and 4, the platforms 9A and 9B are shown with the front part 15 in the position shown in Fig. 5A. In the position shown in Fig. 5B, the free end 17 of the front part 15 projects downwardly and the part 15 does not prevent a car being driven over the platform and onto the next platform. In Figs. 3 and 4, the platform 9C is shown with the front part 15 in the position shown in Fig. 5B.

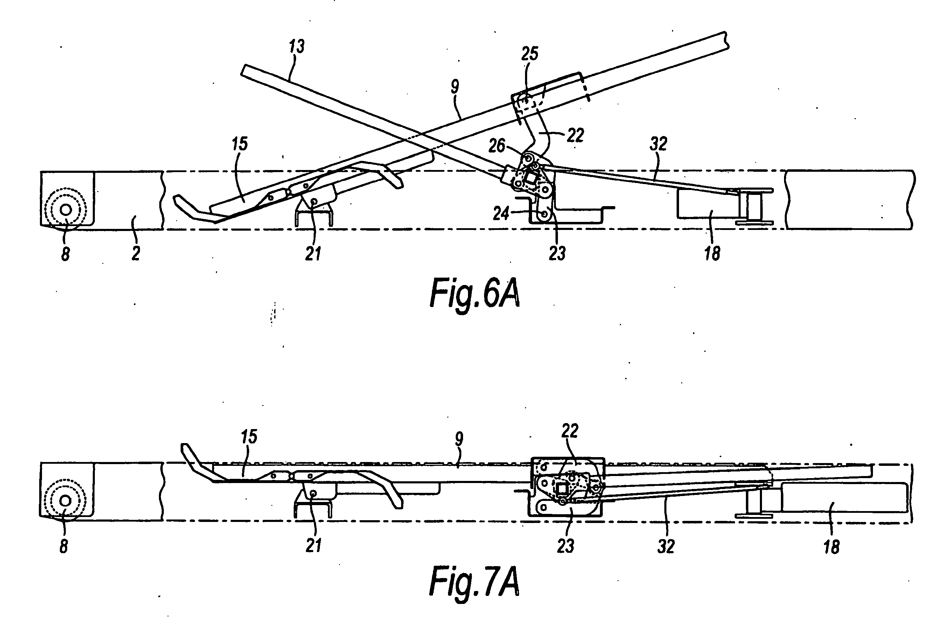

For cars of different lengths it may be desirable for the dimensions of the front part 15 to be altered, as indicated schematically in Fig. 5C where alternative lengths of front part 15 are shown. It is preferred to fit a single front part 15 to each platform and to change the front part to accommodate a different size of vehicle but, if desired, a plurality of front parts may be mounted in combination on one platform and then just the front part of the required size pivoted into the position shown in Fig. 5A. (In Figs. 6A and 7A each front part 15 is shown in both of its positions, but it should be understood that only one front part is present.)

As can be seen in Fig. 4, pairs of small platforms 18A and 18B are provided to the rear of the platforms 9A and 9B respectively. These small platforms form parts of the wheel tracks for the cars and are pivotable about a vertical axis between the active position shown in Fig. 4 to the rear of the platform 9B, where the platforms are aligned with the wheel tracks and provide support for a wheel as it moves from one platform to another, and the stowed position shown in Fig. 4 to the rear of the platform 9A, where the small platforms are rotated through ninety degrees and leave space between the adjacent platforms 9A and 9B as well as allowing room for the front parts 15 of the platform 9B to adopt the position shown in Fig. 5A.

The small platforms 18A and 18B are arranged to be rotated between the two positions when the lever mechanisms 12A and 12B, respectively, are operated, as will be described below.

At the rear of the frame 2, a storage box is provided and chain for use when removing the frame from the container can be stored in the box.

In use, the doors of the freight container 1 are opened and the frame 2 manoeuvred, for example by a fork lift truck, into the position shown in Fig. 1 with the platforms 9A, 9B and 9C in their horizontal, inclined, position. The ramps 11 are put into the position shown in Figs. 2 to 4 and three cars are then driven onto the platforms 9A, 9B and 9C. In Fig. 1 the first car 3A is shown after it has been driven into position. Until the car 3A is in position, only the front part 17 of the platform 9A is put in the position shown in Fig. 5A. Once the car 3A is in the position shown in Fig. 1, it is then tilted by the lever mechanism 12A, as will be described below. During that tilting the small platforms 18A are pivoted into the position shown in Fig. 4. The front part 17 of the platform 9B is then pivoted into the position shown in Fig. 5A and the second car 3B driven onto the platform 9B. The lever mechanism 12B is then operated tilting the car 3B and pivoting the small platforms 18B through 90 degrees to the position of the platforms 18A shown in Fig. 4. The front part 17 of the platform 9C is then pivoted into the position shown in Fig. 5A and the third car 3C driven onto the platform 9C. The lever mechanism 12C is then operated tilting the car 3C. In this case there are no small platforms to be moved. As can be seen from Fig. 2, during tilting, the front wheel of each car moves down while the rear wheel is lifted up. The tilting does raise the centre of gravity of each car, but the amount by which it is raised is reduced because the front of the car moves downwards.

Once the cars are in the position shown in Fig. 2, the ramps 11 are stowed, the rear end of the frame 2 is lifted, for example by a fork lift truck, and the frame 2 is pushed into the container 1 with the wheels 8 of the frame facilitating this movement. The frame occupies substantially the whole length of the container. By tilting the cars it becomes possible to accommodate three cars, each of length 4500 mm and of height 1460 mm in a standard 40 ft (12192 mm) freight container. If desired, for added security, the cars may be strapped to the frame and/or the frame locked down onto the container floor.

Once the doors of the container are closed, the container can be transported in the same way as any other ISO container.

When the container arrives at its destination, the cars can be unloaded by carrying out the steps described above in reverse. If desired, instead of using a fork lift truck to remove the frame 2 from the freight container 1, the frame 2 may be pulled out of the container using a chain attached to a fork lift truck or another vehicle.

It may be noted that the frame 2 is of relatively small overall height when the platforms 9A, 9B and 9C are not tilted and six or even seven frames can be stacked on top of one another and conveyed back to the location where the cars were loaded or to another location, within a standard freight container.

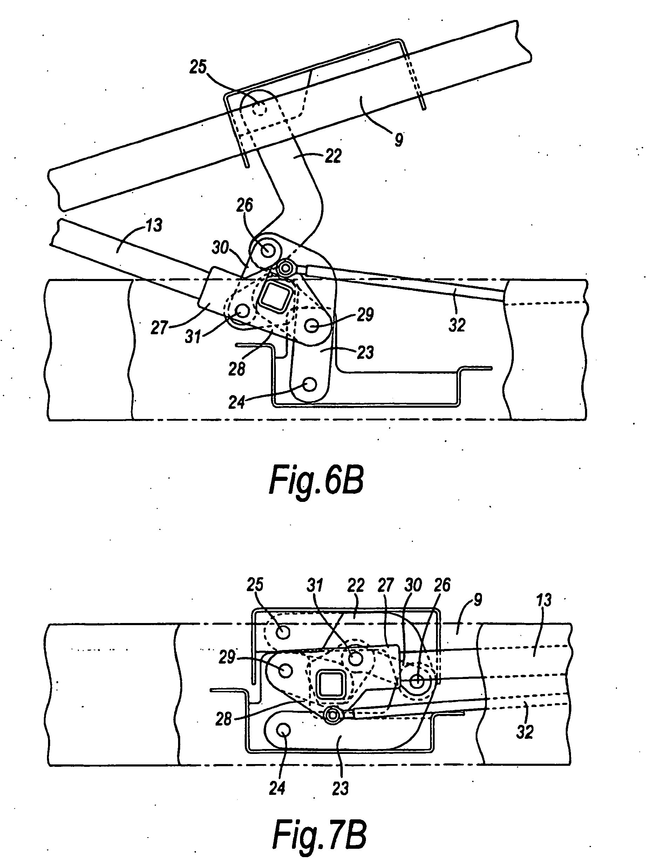

Referring now to Figs. 6A, 6B, 7A and 7B, there is shown a first form of lever mechanism for tilting each of the platforms 9A and 9B. The lever mechanism for tilting the platform 9C is very similar but slightly simpler and will be described later. In Figs. 6A, 6B, 7A and 7B, parts corresponding to the parts 9A, 9B, 12A, 12B, 13A and 13B are referenced by the same numerals but the A or B suffix is omitted.

It is convenient firstly to describe the parts of the lever mechanism with reference to Figs. 6A and 6B where the mechanism 12 and the platform 9 are shown in their tilted positions.

The platform 9 is pivotally mounted on an axle 21 on the frame 2 for tilting movement about a horizontal axis transverse to the length of the frame. An upper link 22 and a lower link 23 provide another connection between the platform 9 and the frame 2: the bottom of the lower link 23 is pivotally connected to the frame at 24, the top of the upper link 22 is pivotally connected to the platform 9 at 25 and the top of the lower link 23 is pivotally connected to the bottom of the upper link 22 at a moving pivot 26.

The lever 13 is located in a socket 27 of a base 28 which is pivotally connected to the frame 2 at a pivot 29. The base 28 is connected to the upper and lower links 22, 23 by a driving link 30 which is pivotally connected at one end to the moving pivot 26 and at the other end to a pivot point 31 on the base 28. Whilst it would be possible to connect the lever 13 directly to one of the links 22, 23, the indirect connection involving the driving link 30 enables a greater angular movement of the lever 13 to be required to move the platform 9 from its horizontal to its tilted position and therefore reduces the force that an operator has to apply to effect the tilting.

Also pivotally connected to the base 28 is a rod 32 which at its other end is connected to an arm 33 on which a small platform 18 is carried.

In order to move the platform from the tilted position shown in Figs. 6A and 6B to the horizontal position shown in Figs. 7A and 7B, the lever 13 is rotated clockwise about the pivot 29. This causes the base 28 to rotate clockwise raising the bottom of the driving link 30 to cause clockwise pivoting of the lower link 23 and anticlockwise pivoting of the upper link 22. In Fig. 6B a notional straight line may be drawn between the pivot points 24 and 25, from which it can be seen that the moving pivot 26 starts at a position beyond that straight line (the centreline). Thus initially, as a result of this over-centre mechanism, the platform is tilted more, but, once the moving pivot 26 passes the centreline, the tilting is reduced.

As can be seen from the drawings, the lever 13 is rotated in total through an angle of about 150 degrees when moving from the position shown in Figs. 6A and 6B to the position shown in Figs. 7A and 7B. During this rotation the links 22 and 23 rotate about one quarter turn. Also, the rotation of the base 28 pushes the rod 32 to the right rotating the small platform 18 from the position of the platforms 18A shown in Fig. 4 to the position of the platforms 18B shown in Fig. 4. To move the platform back to a tilted position, the lever is moved back, reversing the movements of the mechanism.

In the description immediately above, references to directions such as "clockwise" and to the "right" are to the directions as shown in the drawings. Also it should be understood that the lever mechanism is described as if it operated within a single vertical plane whereas in fact it extends across the width of the frame with, for example, a rod 32 on each side of the frame for pivoting a respective small platform 18.

As may now already be understood, the lever mechanism 12C is exactly the same as the mechanisms 12A and 12B just described except that no rods 32 are provided because none are required since there are no small pivoting platforms to the rear of the platform 12C.

Whilst in some of the drawings each lever mechanism 12A, 12B and 12C is shown with its own lever 13A, 13B and 13C, it should be understood that the lever 13 may be removable from the socket 27 in which it is received so that only one lever may be required.

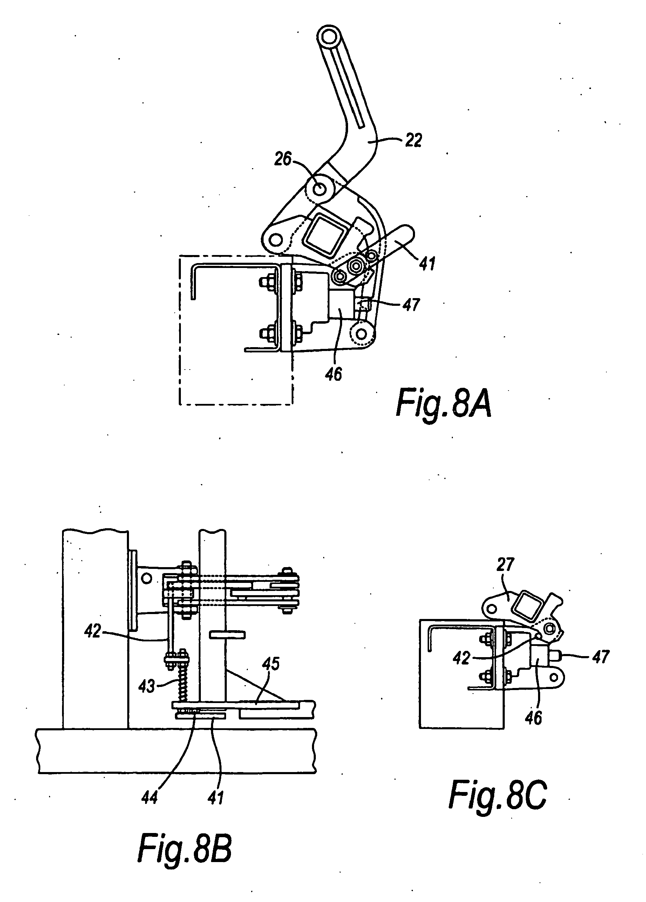

Figs. 8A to 9C show a modified form of the lever mechanism described above with reference to Figs. 6A to 7B. The modified mechanism is similar in many respects to the mechanism shown in Figs. 6A to 7B and parts corresponding to those shown in Figs. 6A to 7B are referenced by the same reference numerals. The mechanism of Figs. 8A to 9C incorporates two additional features which are described below.

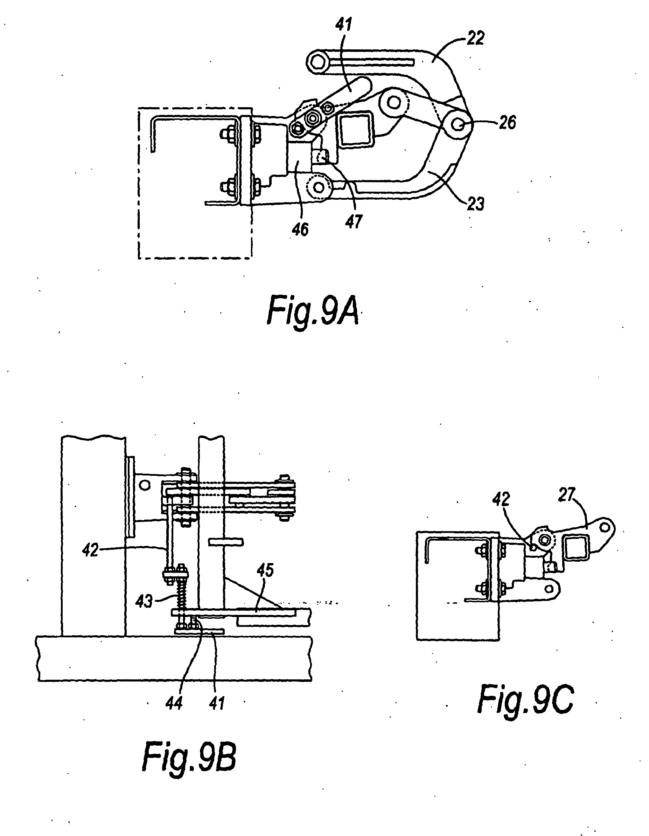

Firstly, the lever mechanism includes a locking lever 41 which can be used to move a locking bar 42 along its horizontal axis (i.e. upwardly and downwardly as viewed in Figs. 8B and 9B). The locking bar is spring biased to an inner position (an upper position as seen in Figs. 8B and 9B) by a compression spring 43 but can be moved outwardly against the bias of the spring 43 by an operator. As shown in Fig. 8C, the locking bar 42 in its inner position prevents movement of the mechanism out of the tilted position by bearing against part of the base 27. If, however, the locking bar 42 is moved outwardly by an operator moving the lever 41 outwardly, the bar is moved clear of the base 27 and the mechanism is free to move. Fig. 9B shows the locking bar moved to this outward position. Also visible in Fig. 9B is a pin 44 which in the inner position shown in Fig. 8B is received in an opening in a member 45 but which is moved clear of the opening when the lever 41 is moved outwardly, enabling the lever to be held in the released position if it is rotated to move the pin 44 out of alignment with the opening in the member 45.

The locking bar 42 is also operable to lock the lever mechanism in the position corresponding to the non-tilted position of the platform. In this case the relevant parts are in the position shown in Fig. 9C with the end of the bar 42 bearing against a different part of the base 27 and thereby preventing the movement of the mechanism out of the non-tilted position. This of course applies for the case where the lever 41 is in its inner position (shown in Fig. 8B) rather than its outer position (shown in Fig. 9B). As already described, the locking lever 41 can be pulled outwardly to the position shown in Fig. 9B to move the end of the locking bar 42 clear of the base 27 and allow the mechanism to be moved back to the position shown in Figs. 8A to 8C with the platform tilted.

Thus, in the first modification to the lever mechanism, a locking mechanism is provided for locking the lever mechanism in both the tilted and non-tilted positions of the platform.

A second modification to the lever mechanism is the addition of a hydraulic retarder cylinder 46 of a kind known per se. The cylinder includes a piston with a small aperture through which oil can pass to allow slow movement of the piston and a spring which returns the piston to an outer position. The piston has an outwardly projecting end 47 shown in Figs. 8A, 9A. As can be seen from those drawings, as the tilting mechanism arrives in the non-tilted position (Fig. 9A), a part of the mechanism (part of the base 27) presses inwardly on the end 47 of the piston and is thereby brought to a less abrupt standstill. Similarly as the tilting mechanism arrives in the tilted position (Fig. 8A), part of the lower link 23 presses inwardly on the end 47 of the piston and is therefore brought to a less abrupt standstill. In this way the risk of injury to a person or damage to the mechanism is reduced.

Thus, in the second modification to the lever mechanism, a retarder cylinder is provided to make less abrupt the deceleration of the parts of the mechanism as they reach either of their end positions.

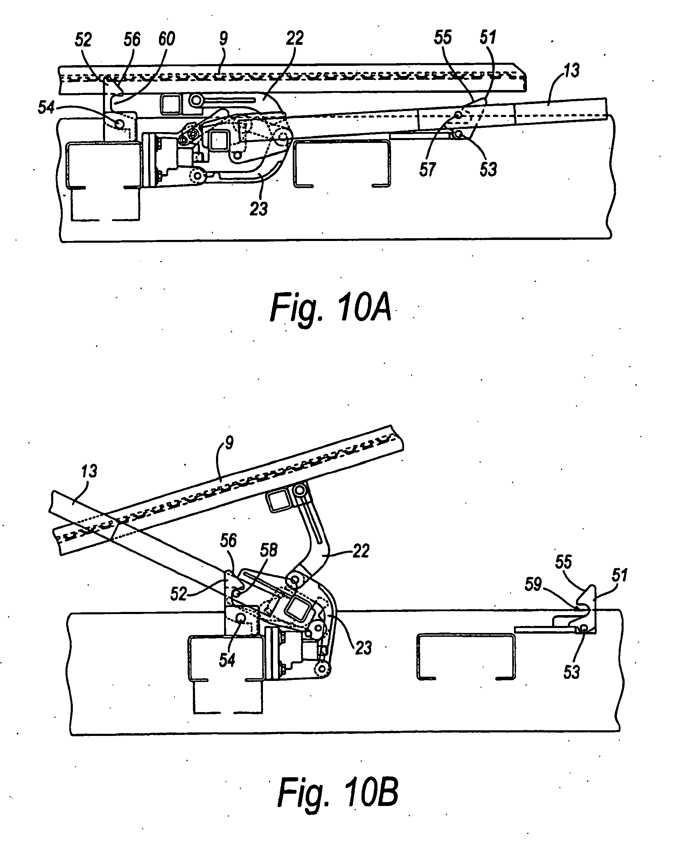

Figs. 10A and 10B show another modified form of the lever mechanism described above with reference to Figs. 6A to 7B. The modified mechanism is again similar in many respects to the mechanism shown in Figs. 6A to 7B and parts corresponding to those shown in Figs. 6A to 7B are referenced by the same reference numerals. The mechanism of Figs. 10A and 10B includes another form of locking mechanism that can be used to lock each of the lever handles 13A to 13C in each of its end positions.

In the arrangement shown in Figs. 10A and 10B, two hooks 51 and 52 are provided on the frame 2 in the region of each lever handle. Both of the hooks 51, 52 are resiliently biased to an upright position but can be pivoted against the resilient bias to an inclined position. The hook 51 is pivotable clockwise (as seen in Figs. 10A and 10B) about a pivot 53 into its inclined position and is shown in that position in Fig. 10A and in its upright position in Fig. 10B. The hook 52 is pivotable anticlockwise (as seen in Figs. 10A and 10B) about a pivot 54 into an inclined position (not shown) and is shown in its upright position in Figs. 10A and 10B. The resilient bias of each hook 51, 52 is provided by a torsion spring (not shown). The top face of each hook 51, 52 defines a respective inclined cam follower surface 55, 56 and each handle 13 includes posts 57, 58.

The post 57 is positioned on the handle 13 so that as the handle is moved towards the position shown in Fig. 10A (the untilted position of the platform 9), the post 57 engages the cam follower surface 55 of the hook 51 causing the hook to pivot clockwise (as seen in Fig. 10A) into the position shown in Fig. 10A. As the handle 13 arrives at the position shown in Fig. 10A, the post 57 enters a recess 59 in the hook 51, allowing the hook to return to its upright position. The handle 13 is then held in its end position by the hook 51. To release the handle 13 and allow it to be pivoted to tilt the platform 9, a user manually pivots the hook 51 clockwise as seen in Fig. 10A and is then able to lift the handle. Once the post 57 is clear of the hook 51, the hook returns under its resilient bias to the upright position shown in Fig. 10B.

The post 58 is positioned on the handle 13 so that as the handle is moved towards the position shown in Fig. 10B (the tilted position of the platform 9), the post 58 engages the cam follower surface 56 of the hook 52, causing the hook to pivot anticlockwise (as seen in Fig. 10B). As the handle 13 arrives at the position shown in Fig. 10B, the post 58 enters a recess 60 in the hook 52, allowing the hook to return to its upright position. The handle 13 is then held in its end position by the hook 52. To release the handle 13 and allow it to be pivoted back to the position of Fig. 10A, a user manually pivots the hook 52 anticlockwise (as seen in Fig. 10B) and is then able to lift the handle. Once the post 58 is clear of the hook 52, the hook returns under its resilient bias to the upright position shown in Fig. 10B.

It will be understood that whilst certain particular embodiments of the invention have been described with reference to the accompanying drawings, many changes to those embodiments may be made without departing from the invention which is defined in the claims. Also it should be understood that a feature described with respect to one particular example of the invention may be employed in another example of the invention where that is possible. For example, the retarder cylinder 46, may be provided in the version of the lever mechanism shown in Figs. 10A and 10B.

## Claims

1. A method of loading vehicles (3A, 3B, 3C) into a freight container (1), the method comprising the steps of,
loading vehicles (3A, 3B, 3C) end to end onto an elongate frame (2) disposed at least substantially outside the container (1) but sized to fit within the container (1) and to extend along the length of most of the interior of the container (1), and
subsequently moving the frame (2) with the vehicles (3A, 3B, 3C) thereon into the freight container (1), **characterized**
**in that** the vehicles (3A, 3B, 3C) are carried on the frame (2) tilted about a transverse axis with one end of one vehicle above or below an adjacent end of another vehicle, and in that a vehicle (3A, 3B, 3C) is loaded onto the frame in a substantially horizontal orientation and is subsequently moved into its tilted position by manual operation of a mechanism (12, 13).

2. A method according to claim 1, in which the vehicles (3A, 3B, 3C) are cars

3. A method according to claim 1 or 2, in which the frame (2) is not fixed to the container (1).

4. A method according to any preceding claim, in which the front of one vehicle is below the adjacent rear of another vehicle.

5. A method according to any preceding claim, in which the tilting of the vehicle includes some downward movement of one end of the vehicle.

6. A method according to any preceding claim, in which the mechanism is a lever mechanism (12),

7. A method according to claim 6, in which the free end of a lever (13) is moved through a distance of more than 1 m to move the vehicle into its tilted position.

8. A method according to claim 6 or 7, in which the lever mechanism (12) can be locked in a position corresponding to the tilted position of the: vehicle and/or in a position corresponding to the substantially horizontal position of the vehicle.

9. A method according to claim 7 or 8, in which the vehicle is tilled to an angle in the range of 10 to 30 degrees to the horizontal,

10. A method according to any preceding claim, in which the freight container has a closed end and an openable end through which the frame (2) is moved when the vehicles (3A, 3B, 3c) are loaded into the container (1).

11. A method according to claim 10, in which the vehicles (3A, 3B, 3C) are loaded into the container (1) with the vehicles facing towards the front of the container.

12. A method according to any preceding claim, in which three vehicles (3A, 3B, 3C) are loaded end to end on the frame (2) and then moved into the container (1),

13. A method according to any preceding claim, further including the subsequent step of transporting the container (1) from one place to another with the vehicles (3A, 3B, 3C) contained therein.

14. A method according to claim 13, further including the subsequent steps of:
moving the frame (2) with the vehicles (3A, 3B, 3C) loaded thereon out of the container until the frame (2) is disposed at least substantially outside the container (1), and
subsequently unloading the vehicles (3A, 3B, 3C) from the frame (2).

15. A method according to claim 14, further including the subsequent steps of placing the unloaded frame (2) in another freight container and transporting it to another place in that other container.

16. A method according to claim 15, in which a plurality of unloaded frames (2) are placed in said other freight container and transported to another place in that other container.

17. A freight container (1) and frame (2) combination comprising:
a freight container (1),
a frame (2) receivable in the container for expending along the length of most of the interior of the container (1), the frame (2) being suitable for receiving vehicles (3A, 3B, 3C) loaded end to end.on the frame (2) and being movable between a position substantially within the container (1) and a position in which it is substantially outside the container (1), **characterized in that**
the frame (2) includes a plurality of platform assemblies (9) a long the length of the frame, each assembly including a respective tiltably mounted platform and a respective manually operated mechanism (12, 13) for tilting the platform.

18. A combination according to claim 17, in which the frame is not fixed to the container.

19. A combination according to claim 17 or 18, in which the mechanism for tilting the platform is arranged such that the tilting of the vehicle includes some downward movement of one end of the vehicle.

20. A combination according to any of claims 17 to 19, in which each platform is able to be tilted through an angle in the range of 10 to 30 degrees.

21. A combination according to any of claims 17 to 20, in which the mechanism for tilting each platform is a lever mechanism (12,13).

22. A combination according to any of claims 17 to 21, further including a locking mechanism (41,42) for locking the lever mechanism in a position corresponding to the tilted position of the vehicle and/or in a position corresponding to the non-tilted position of the vehicle.

23. A combination according to claim 22, in which the locking mechanism (41,42) includes a resiliently biased latching member.

24. A combination according to claim 23, in which a first latching member is provided for locking the mechanism in a position corresponding to the tilted position of the vehicle and a second latching member is provided for locking the mechanism in a position corresponding to the substantially horizontal position of the vehicle.

25. A combination according to any of claims 17 to 24, further including a retarding mechanism (46) for decelerating parts of the frame as they approach one or both end positions.

26. A frame (2) for use in a freight container and frame combination according to any of claims 17 to 25, comprising a plurality of platform assemblies (9) along the length of the frame, each assembly including a respective tiltably mounted platform and a respective manually operated mechanism (12,13) for tilting the platform.

## Patentansprüche

1. Verfahren zum Laden von Fahrzeugen (3A, 3B, 3C) in einen Frachtcontainer (1), wobei das Verfahren die folgenden Schritte umfasst:
Laden von Fahrzeugen (3A, 3B, 3C) Ende an Ende auf einen länglichen Rahmen (2), der wenigstens teilweise außerhalb des Containers (1) angeordnet ist, jedoch so bemessen ist, dass er in den Container (1) passt, und sich über die Länge des größten Teils des Innenraums des Containers (1) erstreckt, und
anschließend Bewegen des Rahmens (2) mit den darauf vorhandenen Fahrzeugen (3A, 3B, 3C) in den Frachtcontainer (1),
**dadurch gekennzeichnet, dass**
die Fahrzeuge (3A, 3B, 3C) auf dem Rahmen (2) um eine Querachse geneigt in der Weise, dass sich ein Ende des Fahrzeugs über oder unter einem benachbarten Ende eines weiteren Fahrzeugs befindet, unterstützt sind und dass ein Fahrzeug (3A, 3B, 3C) auf den Rahmen in einer im Wesentlichen horizontalen Orientierung geladen wird und anschließend in seine geneigte Position durch manuelle Betätigung eines Mechanismus (12, 13) bewegt wird.

2. Verfahren nach Anspruch 1, wobei die Fahrzeuge (3A, 3B, 3C) Kraftwagen sind.

3. Verfahren nach Anspruch 1 oder 2, wobei der Rahmen (2) am Container (1) nicht befestigt ist.

4. Verfahren nach einem vorhergehenden Anspruch, wobei sich die Vorderseite eines Fahrzeugs unter der benachbarten Rückseite eines weiteren Fahrzeugs befindet.

5. Verfahren nach einem vorhergehenden Anspruch, wobei das Neigen des Fahrzeugs eine kleine Abwärtsbewegung eines Endes des Fahrzeugs umfasst.

6. Verfahren nach einem vorhergehenden Anspruch, wobei der Mechanismus ein Hebelmechanismus (12) ist

7. Verfahren nach Anspruch 6, wobei das freie Ende eines Hebels (13) über einen Abstand von mehr als 1 m bewegt wird, um das Fahrzeug in seine geneigte Position zu bewegen.

8. Verfahren nach Anspruch 6 oder 7, wobei der Hebelmechanismus (12) in einer Position, die der geneigten Position des Fahrzeugs entspricht, und/oder in einer Position, die der im Wesentlichen horizontalen Position des Fahrzeugs entspricht, verriegelt werden kann.

9. Verfahren nach Anspruch 7 oder 8, wobei das Fahrzeug um einen Winkel im Bereich von 10 bis 30 Grad in Bezug auf die Horizontale geneigt wird.

10. Verfahren nach einem vorhergehenden Anspruch, wobei der Frachtcontainer ein geschlossenes Ende und ein zu öffnendes Ende, durch das der Rahmen (2) bewegt wird, wenn die Fahrzeuge (3A, 3B, 3C) in den Container (1) geladen werden, besitzt.

11. Verfahren nach Anspruch 10, wobei die Fahrzeuge (3A, 3B, 3C) in den Container (1) so geladen werden, dass die Fahrzeuge zur Vorderseite des Containers gerichtet sind.

12. Verfahren nach einem vorhergehenden Anspruch, wobei drei Fahrzeuge (3A, 3B, 3C) Ende an Ende auf den Rahmen (2) geladen und dann in den Container (1) bewegt werden.

13. Verfahren nach einem vorhergehenden Anspruch, das ferner den nachfolgenden Schritt des Transportierens des Containers (1) von einem Ort zu einem weiteren Ort mit den darin enthaltenen Fahrzeugen (3A, 3B, 3C) umfasst.

14. Verfahren nach Anspruch 13, das ferner anschließend die folgenden Schritte umfasst:
Bewegen des Rahmens (2) mit den darauf geladenen Fahrzeugen (3A, 3B, 3C) aus dem Container, bis der Rahmen (2) wenigstens teilweise außerhalb des Containers (1) angeordnet ist, und
anschließend Entladen der Fahrzeuge (3A, 3B, 3C) von dem Rahmen (2).

15. Verfahren nach Anspruch 14, das ferner die nachfolgenden Schritte des Anordnens des entladenen Rahmens (2) in einem weiteren Frachtcontainer und des Transportierens des Rahmens zu einem weiteren Ort in diesem anderen Container umfasst.

16. Verfahren nach Anspruch 15, wobei mehrere entladene Rahmen (2) in dem anderen Frachtcontainer angeordnet und zu einem weiteren Ort in dem anderen Container transportiert werden.

17. Kombination aus einem Frachtcontainer (1) und einem Rahmen (2), die umfasst:
einen Frachtcontainer (1),
einen Rahmen (2), der in dem Container aufgenommen werden kann, so dass er sich über die Länge des größten Teils des Innenraums des Containers (1) erstreckt, wobei der Rahmen (2) Fahrzeuge (3A, 3B, 3C) aufnehmen kann, die Ende an Ende auf den Rahmen (2) geladen sind, und zwischen einer Position im Wesentlichen in dem Container (1) und einer Position, in der er sich im Wesentlichen außerhalb des Containers (1) befindet, bewegt werden kann,
**dadurch gekennzeichnet, dass**
der Rahmen (2) auf der Länge des Rahmens mehrere Plattformanordnungen (9) aufweist, wobei jede Anordnung eine entsprechende neigbar montierte Plattform und einen entsprechenden manuell betätigten Mechanismus (12, 13) zum Neigen der Plattform aufweist.

18. Kombination nach Anspruch 17, wobei der Rahmen nicht an dem Container befestigt ist.

19. Kombination nach Anspruch 17 oder 18, wobei der Mechanismus zum Neigen der Plattform in der Weise angeordnet ist, dass das Neigen des Fahrzeugs eine gewisse Abwärtsbewegung eines Endes des Fahrzeugs umfasst.

20. Kombination nach einem der Ansprüche 17 bis 19, wobei jede Plattform um einen Winkel im Bereich von 10 bis 30 Grad geneigt werden kann.

21. Kombination nach einem der Ansprüche 17 bis 20, wobei der Mechanismus zum Neigen jeder Plattform ein Hebelmechanismus (12, 13) ist.

22. Kombination nach einem der Ansprüche 17 bis 21, die ferner einen Verriegelungsmechanismus (41, 42) zum Verriegeln des Hebelmechanismus in einer Position, die der geneigten Position des Fahrzeugs entspricht, und/oder in einer Position, die der nicht geneigten Position des Fahrzeugs entspricht, umfasst.

23. Kombination nach Anspruch 22, wobei der Verriegelungsmechanismus (41, 42) ein elastisch vorbelastetes Klinkenelement aufweist.

24. Kombination nach Anspruch 23, wobei ein erstes Klinkenelement vorgesehen ist, um den Mechanismus in einer Position, die der geneigten Position des Fahrzeugs entspricht, zu verriegeln, und ein zweites Klinkenelement vorgesehen ist, um den Mechanismus in einer Position, die der im Wesentlichen horizontalen Position des Fahrzeugs entspricht, zu verriegeln.

25. Kombination nach einem der Ansprüche 17 bis 24, die ferner einen Verzögerungsmechanismus (46) umfasst, um Teile des Rahmens zu verlangsamen, wenn sie sich einer oder beiden Endpositionen annähern.

26. Rahmen (2) für die Verwendung in einer Kombination aus einem Frachtcontainer und einem Rahmen nach einem der Ansprüche 17 bis 25, der auf der Länge des Rahmens mehrere Plattformanordnungen (9) aufweist, wobei jede Anordnung eine entsprechende neigbar montierte Plattform und einen entsprechenden manuell betätigten Mechanismus (12, 13) zum Neigen der Plattform enthält.

## Revendications

1. Procédé de chargement de véhicules (3A, 3B, 3C) dans un conteneur de transport (1), le procédé comprenant les étapes consistant à :
charger les véhicules (3A, 3B, 3C) bout à bout sur un châssis allongé (2) disposé au moins essentiellement à l'extérieur du conteneur (1) mais dimensionné pour tenir dans le conteneur (1) et pour s'étendre sur la longueur de la majeure partie de l'intérieur du conteneur (1), et
introduire ensuite le châssis (2), avec les véhicules (3A, 3B, 3C) placés dessus, dans le conteneur de transport (1),
***caractérisé en ce que*** les véhicules (3A, 3B, 3C) sont supportés sur le châssis (2) inclinés autour d'un axe transversal avec une extrémité d'un véhicule située au-dessus ou au-dessous d'une extrémité adjacente d'un autre véhicule, et ***en ce qu**'un* véhicule (3A, 3B, 3C) est chargé sur le châssis selon une orientation sensiblement horizontale et est ensuite placé dans sa position inclinée par la manoeuvre manuelle d'un mécanisme (12, 13).

2. Procédé selon la revendication 1, dans lequel les véhicules (3A, 3B, 3C) sont des automobiles.

3. Procédé selon la revendication 1 ou 2, dans lequel le châssis (2) n'est pas fixé au conteneur (1).

4. Procédé selon l'une quelconque des revendications précédentes, dans lequel l'avant d'un véhicule se trouve sous l'arrière adjacent d'un autre véhicule.

5. Procédé selon l'une quelconque des revendications précédentes, dans lequel l'inclinaison du véhicule comprend un certain mouvement vers le bas d'une extrémité du véhicule.

6. Procédé selon l'une quelconque des revendications précédentes, dans lequel le mécanisme est un mécanisme (12) à levier.

7. Procédé selon la revendication 6, dans lequel l'extrémité libre d'un levier (13) est déplacée d'une distance supérieure à 1 mètre pour placer le véhicule dans sa position inclinée.

8. Procédé selon la revendication 6 ou 7, dans lequel le mécanisme (12) à levier peut être verrouillé dans une position correspondant à la position inclinée du véhicule et/ou dans une position correspondant à la position correspondant à la position sensiblement horizontale du véhicule.

9. Procédé selon la revendication 7 ou 8, dans lequel le véhicule est incliné selon un angle compris entre 10 et 30 degrés par rapport à l'horizontale.

10. Procédé selon l'une quelconque des revendications précédentes, dans lequel le conteneur de transport possède une extrémité fermée et une extrémité ouvrable par laquelle le châssis (2) est introduit lorsque les véhicules (3A, 3B, 3C) sont chargés dans le conteneur (1),

11. Procédé selon la revendication 10, dans lequel les véhicules (3A, 3B, 3C) sont chargés dans le conteneur (1) avec les véhicules faisant face à l'avant du conteneur.

12. Procédé selon l'une quelconque des revendications précédentes, dans lequel trois véhicules (3A, 3B, 3C) sont chargés bout à bout sur le châssis (2) puis introduits dans le conteneur (1).

13. Procédé selon l'une quelconque des revendications précédentes, comprenant de plus l'étape ultérieure de transport du conteneur (1) d'un lieu à un autre avec les véhicules (3A, 3B, 3C) qui y sont contenus.

14. Procédé selon la revendication 13, comprenant de plus l'étape ultérieure consistant à :
retirer le châssis (2), avec les véhicules (3A, 3B, 3C) chargés dessus, du conteneur jusqu'à ce que le châssis (2) soit disposés au moins essentiellement à l'extérieur du conteneur (1), et
ensuite décharger les véhicules (3A, 3B, 3C) du châssis (2).

15. Procédé selon la revendication 14, comprenant de plus les étapes ultérieures consistant à placer le châssis (2) déchargé dans un autre conteneur de transport, et à le transporter vers un autre lieu dans cet autre conteneur.

16. Procédé selon la revendication 15, dans lequel une pluralité de châssis déchargés (2) sont placés dans ledit autre conteneur de transport et transportés vers un autre lieu dans cet autre conteneur.

17. Ensemble conteneur de transport (1) et châssis (2), comprenant :
un conteneur de transport (1),
un châssis (2) pouvant être reçu dans le conteneur de manière à s'étendre sur la longueur de la majeure partie de l'intérieur du conteneur (1), le châssis (2) étant apte à recevoir des véhicules (3A, 3B, 3C) chargés bout à bout sur le châssis (2) et étant mobile entre une position essentiellement à l'intérieur du conteneur (1) et une position dans laquelle il est essentiellement à l'extérieur du conteneur (1),
***caractérisé en ce que*** le châssis (2) comprend une pluralité d'unités de plateforme (9) sur la longueur du châssis, chaque unité comprenant une plateforme respective montée de manière à pouvoir être inclinée, et un mécanisme respectif actionné manuellement (12, 13) pour incliner la plateforme.

18. Ensemble selon la revendication 17, dans lequel le châssis n'est pas fixé au conteneur.

19. Ensemble selon la revendication 17 ou 18, dans lequel le mécanisme pour incliner la plateforme est prévu pour que l'inclinaison du véhicule comporte un certain mouvement vers le bas d'une extrémité du véhicule.

20. Ensemble selon l'une quelconque des revendications 17 à 19, dans lequel chaque plateforme peut être inclinée selon un angle compris entre 10 et 30 degrés.

21. Ensemble selon l'une quelconque des revendications 17 à 20, dans lequel le mécanisme pour incliner chaque plateforme est un mécanisme (12, 13) à levier.

22. Ensemble selon l'une quelconque des revendications 17 à 21, comprenant de plus un mécanisme de verrouillage (41, 42) destiné à verrouiller le mécanisme à levier dans une position correspondant à la position inclinée du véhicule et/ou dans une position correspondant à la position non inclinée du véhicule.

23. Ensemble selon la revendication 22, dans lequel le mécanisme de verrouillage (41, 42) comprend un élément de verrouillage sollicité par ressort.

24. Ensemble selon la revendication 23, dans lequel un premier élément de verrouillage est prévu pour verrouiller le mécanisme dans une position correspondant à la position inclinée du véhicule et un deuxième élément de verrouillage est prévu pour verrouiller le mécanisme dans une position correspondant à la position sensiblement horizontale du véhicule.

25. Ensemble selon l'une quelconque des revendications 17 à 24, comprenant de plus un mécanisme retardateur (46) pour décélérer des parties du châssis lorsqu'elles s'approchent de l'une ou de leurs deux positions d'extrémité.

26. Châssis (2) destiné à une utilisation dans un ensemble conteneur de transport et châssis selon l'une quelconque des revendications 17 à 25, comprenant une pluralité d'unités (9) de plateforme sur la longueur du châssis, chaque ensemble comprenant une plateforme respective montée de manière à pouvoir être inclinée, et un mécanisme respectif actionné manuellement (12, 13) pour incliner la plateforme.
